# EUROPEAN PATENT APPLICATION

(11) **EP 3 666 691 A1**
(43) Date of publication of application: **17.06.2020**
(21) Application number: 18844119.0
(22) Date of filing: 13.07.2018
(51) Int. Cl.: B65G 15/34, B32B 1/08, B32B 5/02, F16G 1/10

(54) **MULTILAYERED SEAMLESS BELT AND PRODUCTION METHOD THEREFOR**

(30) Priority: 10.08.2017 JP 2017156127; 01.12.2017 JP 2017231992; 31.05.2018 JP 2018105021
(71) Applicant: Honda Sangyo Co., Ltd., Yokohama-shi, Kanagawa 244-0003 (JP)
(72) Inventor: HONDA Katsuya, Yokohama-shi Kanagawa 244-0003 (JP); YASUNO Hiroaki, Unzen-shi Nagasaki 859-1113 (JP); YAMAGUTI Noritomo, Unzen-shi Nagasaki 859-1113 (JP)
(74) Representative: Regimbeau
(86) International application number: PCT/JP2018/026433
(87) International publication number: WO 2019/031154

(57) **Abstract**

[Problem] A multi-layered seamless belt which has no joint part, which has less conditional unevenness and reduced thickness, and which has excellent strength and durability, heat resistance, non-adhesiveness, abrasion resistance and grip performance, and a method of producing the multi-layered seamless belt are provided.

[Solution] A multi-layered seamless belt, comprising a seamless belt substrate containing heat-resistant woven fabric and a surface layer containing a fluorine resin, a polyimide resin, silicone rubber or a fluororubber, and a method of producing the multi-layered seamless belt.

## Description

### TECHNICAL FIELD

The present invention relates a multi-layered seamless belt and the production method thereof. More specifically, the present invention relates to a multi-layered seamless belt which is a conveyor and heat treatment belt having no joint part, which can be used in the industrial sector for example, which has less conditional unevenness and reduced thickness, and which has excellent strength and durability, heat resistance, non-adhesiveness, abrasion resistance and grip performance, and a method of producing the multi-layered seamless belt.

### BACKGROUND OF THE INVENTION

Conventionally, heat-resistant composite sheets are known, which are formed by combining a woven fabric of heat-resistant fibers having excellent heat resistance, tensile strength and the like with a heat-resistant resin having excellent heat resistance and non-adhesiveness. These heat-resistant composite sheets are used as industry-related heat-resistant and non-adhesive sheets, heat-resistant and non-adhesive conveyor belts, and the like.

Examples of the woven fabric of heat-resistant fibers used in the above-described heat-resistant composite sheet include woven fabrics such as plain weaves, mesh weaves, twill weaves, and satin weaves, of glass fibers, aramid fibers, and the like.

Examples of the heat-resistant resin which is used in the above-described heat-resistant composite sheet include fluorine resins such as a polytetrafluoroethylene resin (PTFE).

However, in general, although the fluorine resin is excellent in heat resistance, cold resistance, non-adhesiveness, chemical resistance, combustion resistance, weather resistance, electric insulation, low friction property, and the like, the fluorine resin has a problem of eay slipping because of its poor abrasion resistance and excellent low friction property.

Examples of heat-resistant resins having better abrasion resistance than a fluorine resin include polyimide resins and the like. In addition, examples of heat-resistant materials which are inferior to a fluorine resin in terms of low friction property, excellent in grip performance, and hardly slippery include polyimide resins, silicone rubber, fluororubber and the like.

Silicone rubber and fluororubber have been used as cushioning materials due to their cushioning properties. However, in general, as a characteristic, silicone rubber has an adhesive surface, and if the surface is excessively adhesive, the object of interest may adhere. Furthermore, foreign objects easily adhere and are difficult to remove, and depending on the application, the migration of the silicone component may be regarded as a problem. In this respect, fluororubber does not contain a silicone component and shows low adhesiveness. However, fluororubber is hard and disadvantageous in terms of price. Thus, fluororubber has both advantages and disadvantages.

As a non-adhesive composite sheet having improved abrasion resistance and grip performance and a method of producing a conveyor belt, for example, a multi-layered sheet having a composite material layer composed of a fluorine resin and a woven fabric of heat-resistant fibers and a surface layer composed of a polyimide resin or silicone rubber has been proposed, and a method of producing an endless belt has also been proposed, in which the multi-layered sheet is cut into a shape of belt, and two opposite ends of the belt-shaped multi-layered sheet are joined to obtain an annular body (JP 2011-31572 A (Patent Document 1)).

Although the sheet and the endless belt described in the above-mentioned Patent Document 1 allow for the effective use as a non-adhesive multi-layered sheet and a conveyor belt having improved abrasion resistance and grip performance, there is room for improvement such as conditional unevenness due to the difference in level at the joint part and durability and strength due to the poor strength.

### PRIOR ART DOCUMENTS

### PATENT DOCUMENTS

Patent Document 1: JP 2011-31572 A

### SUMMARY OF THE INVENTION

### PROBLEMS TO BE SOLVED BY THE INVENTION

The present invention has been achieved in consideration of the above problems. One object of the present invention is to provide a multi-layered seamless belt which is a seamless belt having no joint part, which is adapted to a desired application, required performance, or the like, which has less conditional unevenness and reduced thickness, and which has strength and durability, excellent heat resistance, non-adhesiveness as well as necessary abrasion resistance and grip performance, and a method of producing the multi-layered seamless belt.

### SOLUTIONS TO THE PROBLEMS

The multi-layered seamless belt according to the present invention comprises a seamless belt substrate containing heat-resistant fibers and a surface layer containing a fluorine resin, a polyimide resin, silicone rubber or a fluororubber.

In a preferred aspect, such a multi-layered seamless belt according to the present invention includes a multi-layered seamless belt comprising at least one composite material layer containing a seamless belt substrate containing heat-resistant fibers and a fluorine resin, and a surface layer containing a polyimide resin, silicone rubber or a fluororubber.

In a preferred aspect, such a multi-layered seamless belt according to the present invention includes a multi-layered seamless belt having a treated surface by surface activation which is present between the composite material layer and the surface layer.

In a preferred aspect, such a multi-layered seamless belt according to the present invention includes a multi-layered seamless belt in which the treated surface by surface activation is obtained by performing a baking treatment for silica particle adhesion, a metal sodium etching treatment, a plasma discharge treatment, or a corona discharge treatment onto the composite material layer.

In a preferred aspect, such a multi-layered seamless belt according to the present invention includes a multi-layered seamless belt in which the circumference is 30 to 5,000 mm, particularly preferably 200 to 3,600 mm.

In a preferred aspect, such a multi-layered seamless belt according to the present invention includes a multi-layered seamless belt in which the width is 4 to 1,500 mm, particularly preferably 4 to 1,000 mm.

In a preferred aspect, such a multi-layered seamless belt according to the present invention includes a multi-layered seamless belt in which the seamless belt substrate containing heat-resistant fibers has a thickness of 30 to 1,000 µm, particularly preferably 30 to 700 µm, and the surface layer has a thickness of 1 to 300 µm, particularly preferably 5 to 200 µm in the case of a fluorine resin, 1 to 300 µm, particularly preferably 5 to 200 µm in the case of a polyimide resin, 1 to 700 µm, particularly preferably 10 to 500 µm in the case of silicone rubber, and 1 to 700 µm, particularly preferably from 10 to 500 µm in the case of fluororubber. When the surface layer composed of a single material is formed on one surface of the multi-layered seamless belt (that is, either the inner surface or the outer surface of the multi-layered seamless belt), the thickness of the surface layer is within the above range. When the surface layer composed of a single material is formed on both surfaces of the multi-layered seamless belt (that is, both the inner surface and the outer surface of the multi-layered seamless belt), the thickness of each surface layer on each surface is within the above range. When a surface layer in which a plurality of different material layers are laminated is formed on one or both surfaces of the multi-layered seamless belt, the thickness of each material layer is within the above range.

The method of producing a multi-layered seamless belt according to the present invention comprises forming a surface layer containing a fluorine resin, a polyimide resin, silicone rubber or a fluororubber on a seamless belt substrate containing heat-resistant fibers.

Furthermore, the method of producing a multi-layered seamless belt according to the present invention comprises impregnating a seamless belt substrate containing heat-resistant fibers with an aqueous suspension of fluorine resin particles, drying and then baking the resulting seamless belt substrate to form a composite material layer, and then applying a polyimide resin, silicone rubber or fluororubber to the composite material layer to form a surface layer.

In a preferred aspect, such a method of producing a multi-layered seamless belt according to the present invention includes a method in in which, after the composite material layer is formed, a treated surface by surface activation is formed by performing a baking treatment for silica particle adhesion, a metal sodium etching treatment, a plasma discharge treatment, or a corona discharge treatment onto the composite material layer, and then the polyimide resin, silicone rubber or fluororubber is applied to form a surface layer.

### EFFECTS OF THE INVENTION

According to the present invention, a multi-layered seamless belt can be obtained, which is a multi-layered seamless belt having no joint part, which is adapted to a desired application, required performance, or the like, which has less conditional unevenness and reduced thickness, and which has strength and durability, excellent heat resistance, non-adhesiveness, abrasion resistance and grip performance.

Furthermore, according to the present invention, cutting can be performed in such a way that a multi-layered seamless belt has a desired width.

In some cases, by forming a wide multi-layered seamless belt and cutting this wide multi-layered seamless belt into the desired width, several multi-layered seamless belts having the same length can be produced simultaneously. Furthermore, by adjusting the width during the cutting, it is easy to produce separately multi-layered seamless belts having different widths.

### BRIEF DESCRIPTION OF THE DRAWINGS

FIG. 1 is a cross-sectional view showing the structure of a multi-layered seamless belt according to the present invention.
FIG. 2 is a cross-sectional view showing the structure of a multi-layered seamless belt according to the present invention.
FIG. 3 is a cross-sectional view showing the structure of a multi-layered seamless belt according to the present invention.
FIG. 4 is a cross-sectional view showing the structure of a multi-layered seamless belt according to the present invention.
FIG. 5 is a cross-sectional view showing the structure of a multi-layered seamless belt according to the present invention.
FIG. 6 is a cross-sectional view showing the structure of a multi-layered seamless belt according to the present invention.
FIG. 7 is a cross-sectional view showing the structure of a multi-layered seamless belt according to the present invention.
FIG. 8 is a cross-sectional view showing the structure of a multi-layered seamless belt according to the present invention.
FIG. 9 is a cross-sectional view showing the structure of a multi-layered seamless belt according to the present invention.
FIG. 10 is a cross-sectional view showing the structure of a multi-layered seamless belt according to the present invention.
FIG. 11 is a cross-sectional view showing the structure of a multi-layered seamless belt according to the present invention.
FIG. 12 is a cross-sectional view showing the structure of a multi-layered seamless belt according to the present invention.
FIG. 13 is a cross-sectional view showing the structure of a multi-layered seamless belt according to the present invention.
FIG. 14 is a cross-sectional view showing the structure of a multi-layered seamless belt according to the present invention.
FIG. 15 is a cross-sectional view showing the structure of a multi-layered seamless belt according to the present invention.
FIG. 16 is a cross-sectional view showing the structure of a multi-layered seamless belt according to the present invention.
FIG. 17 is a cross-sectional view showing the structure of a multi-layered seamless belt according to the present invention.
FIG. 18 is a cross-sectional view showing the structure of a multi-layered seamless belt according to the present invention.
FIG. 19 is a cross-sectional view showing the structure of a multi-layered seamless belt according to the present invention.
FIG. 20 is a cross-sectional view showing the structure of a multi-layered seamless belt according to the present invention.
FIG. 21 is a cross-sectional view showing the structure of a multi-layered seamless belt according to the present invention.
FIG. 22 is a cross-sectional view showing the structure of a multi-layered seamless belt according to the present invention.
FIG. 23 is a cross-sectional view showing the structure of a multi-layered seamless belt according to the present invention.
FIG. 24 is a cross-sectional view showing the structure of a multi-layered seamless belt according to the present invention.
FIG. 25 is a cross-sectional view showing the structure of a multi-layered seamless belt according to the present invention.
FIG. 26 is a cross-sectional view showing the structure of a multi-layered seamless belt according to the present invention.
FIG. 27 is a cross-sectional view showing the structure of a multi-layered seamless belt according to the present invention.

### DETAILED DESCRIPTION OF THE INVENTION

### EMBODIMENTS OF THE INVENTION

The multi-layered seamless belt according to the present invention comprises a seamless belt substrate containing heat-resistant fibers and a surface layer containing a fluorine resin, a polyimide resin, silicone rubber or a fluororubber.

In a preferred aspect, such a multi-layered seamless belt according to the present invention includes a multi-layered seamless belt comprising at least one composite material layer containing a seamless belt substrate containing heat-resistant fibers and a fluorine resin, and a surface layer containing a polyimide resin, silicone rubber or a fluororubber.

The seamless belt in the present specification specifically refers to a seamless (that is, there is no seam) endless belt.

In a preferred aspect, such a multi-layered seamless belt according to the present invention includes a multi-layered seamless belt having a treated surface by surface activation which is present between the composite material layer and the surface layer.

In a preferred aspect, such a multi-layered seamless belt according to the present invention includes a multi-layered seamless belt in which the treated surface by surface activation is obtained by performing a baking treatment for silica particle adhesion, a metal sodium etching treatment, a plasma discharge treatment, or a corona discharge treatment onto the composite material layer.

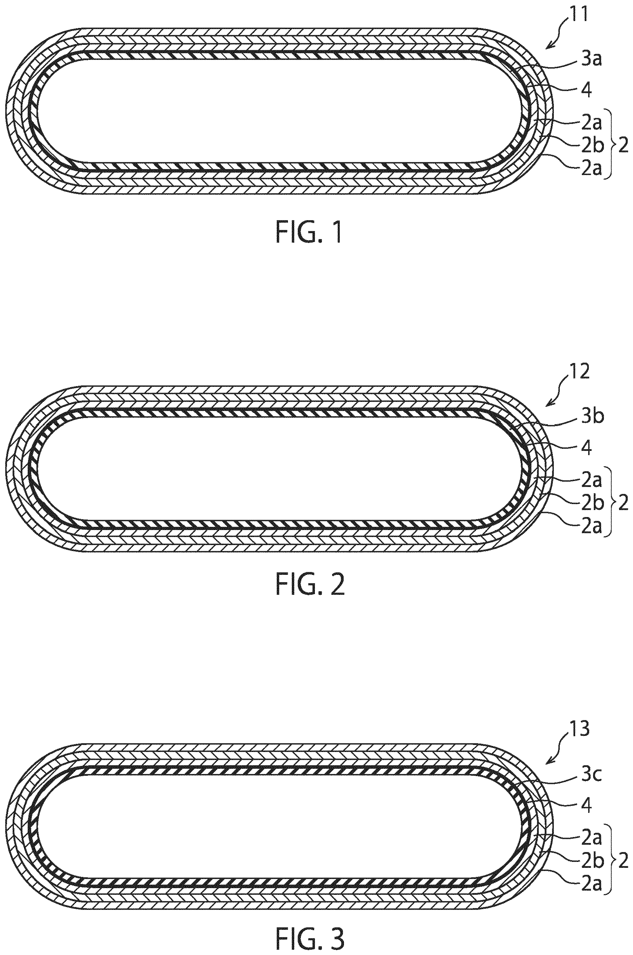

Preferred specific examples of such a multi-layered seamless belt according to the present invention include those described in FIGS. 1 to 27.

The multi-layered seamless belt 11 according to the present invention shown in FIG. 1 is a multi-layered seamless belt comprising a single composite material layer 2 composed of a fluorine resin 2a and a seamless belt substrate containing heat-resistant fibers 2b, and a surface layer composed of a polyimide resin 3a, wherein the surface layer 3a is formed through a treated surface 4 formed by a surface activation treatment performed on the inner surface of the composite material layer 2.

The multi-layered seamless belt 12 according to the present invention shown in FIG. 2 is a multi-layered seamless belt comprising a single composite material layer 2 composed of a fluorine resin 2a and a seamless belt substrate containing heat-resistant fibers 2b, and a surface layer composed of silicone rubber 3b, wherein the surface layer 3b is formed through a treated surface 4 formed by a surface activation treatment performed on the inner surface of the composite material layer 2.

The multi-layered seamless belt 13 according to the present invention shown in FIG. 3 is a multi-layered seamless belt comprising a single composite material layer 2 composed of a fluorine resin 2a and a seamless belt substrate containing heat-resistant fibers 2b, and a surface layer composed of fluororubber 3c, wherein the surface layer 3c is formed through a treated surface 4 formed by a surface activation treatment performed on the inner surface of the composite material layer 2.

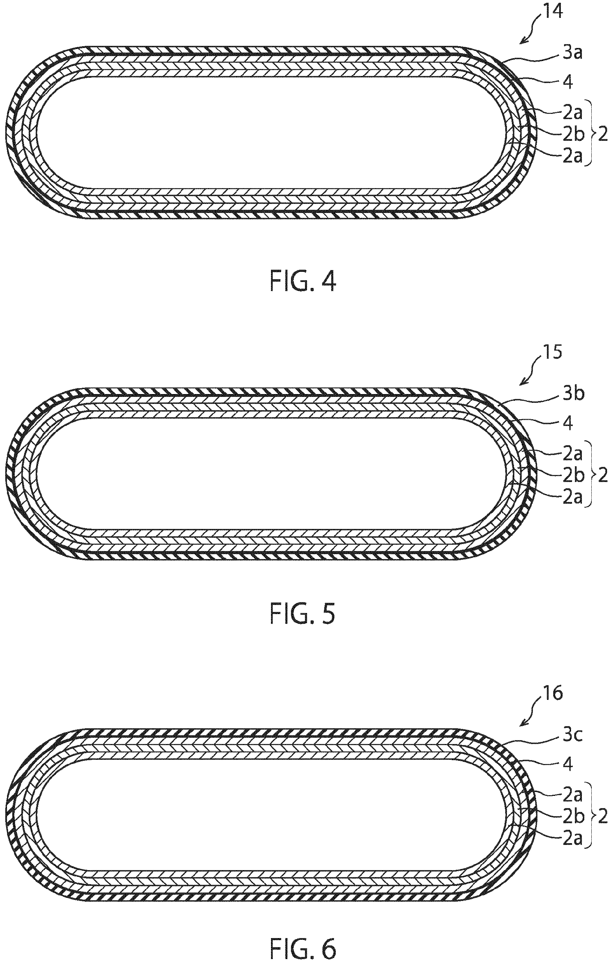

The multi-layered seamless belt 14 according to the present invention shown in FIG. 4 is a multi-layered seamless belt comprising a single composite material layer 2 composed of a fluorine resin 2a and a seamless belt substrate containing heat-resistant fibers 2b, and a surface layer composed of a polyimide resin 3a, wherein the surface layer 3a is formed through a treated surface 4 formed by a surface activation treatment performed on the outer surface of the composite material layer 2.

The multi-layered seamless belt 15 according to the present invention shown in FIG. 5 is a multi-layered seamless belt comprising a single composite material layer 2 composed of a fluorine resin 2a and a seamless belt substrate containing heat-resistant fibers 2b, and a surface layer composed of silicone rubber 3b, wherein the surface layer 3b is formed through a treated surface 4 formed by a surface activation treatment performed on the outer surface of the composite material layer 2.

The multi-layered seamless belt 16 according to the present invention shown in FIG. 6 is a multi-layered seamless belt comprising a single composite material layer 2 composed of a fluorine resin 2a and a seamless belt substrate containing heat-resistant fibers 2b, and a surface layer composed of fluororubber 3c, wherein the surface layer 3c is formed through a treated surface 4 formed by a surface activation treatment performed on the outer surface of the composite material layer 2.

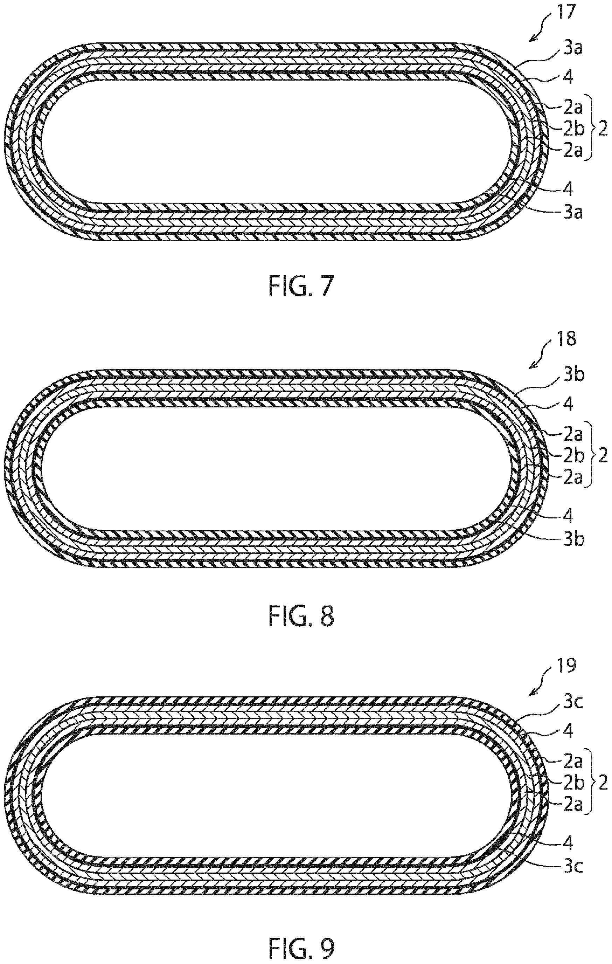

The multi-layered seamless belt 17 according to the present invention shown in FIG. 7 is a multi-layered seamless belt comprising a single composite material layer 2 composed of a fluorine resin 2a and a seamless belt substrate containing heat-resistant fibers 2b, and surface layers composed of a polyimide resin 3a, wherein the surface layers 3a are formed through treated surfaces 4 formed by a surface activation treatment performed on both surfaces of the composite material layer 2.

The multi-layered seamless belt 18 according to the present invention shown in FIG. 8 is a multi-layered seamless belt comprising a single composite material layer 2 composed of a fluorine resin 2a and a seamless belt substrate containing heat-resistant fibers 2b, and surface layers composed of silicone rubber 3b, wherein the surface layers 3b are formed through treated surfaces 4 formed by a surface activation treatment performed on both surfaces of the composite material layer 2.

The multi-layered seamless belt 19 according to the present invention shown in FIG. 9 is a multi-layered seamless belt comprising a single composite material layer 2 composed of a fluorine resin 2a and a seamless belt substrate containing heat-resistant fibers 2b, and surface layers composed of fluororubber 3c, wherein the surface layers 3c are formed through treated surfaces 4 formed by a surface activation treatment performed on both surfaces of the composite material layer 2.

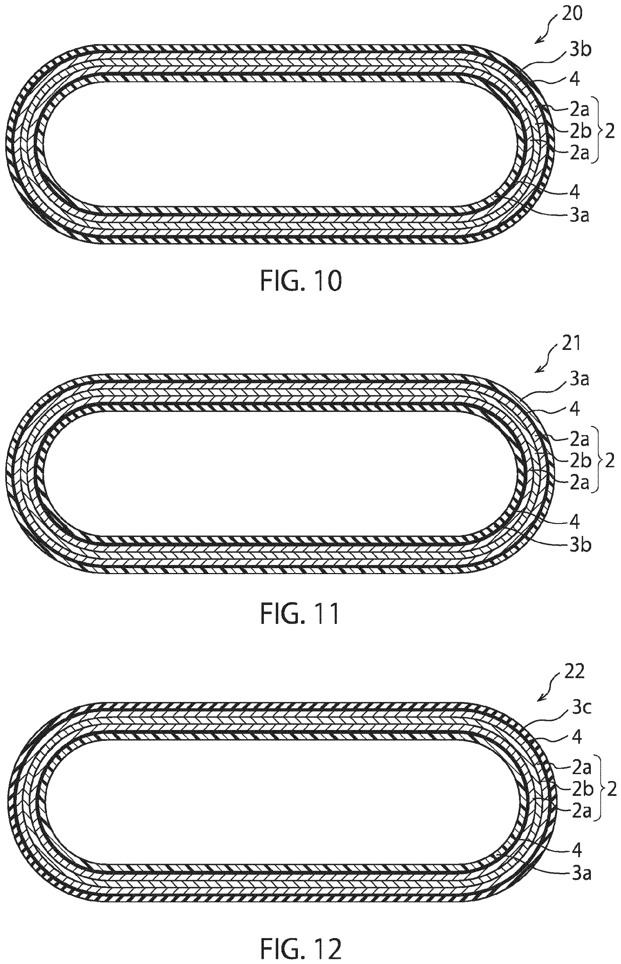

The multi-layered seamless belt 20 according to the present invention shown in FIG. 10 is a multi-layered seamless belt comprising a single composite material layer 2 composed of a fluorine resin 2a and a seamless belt substrate containing heat-resistant fibers 2b, a surface layer composed of a polyimide resin 3a on the inner surface, and a surface layer composed of silicone rubber 3b on the outer surface, wherein the surface layers 3a and 3b are formed through treated surfaces 4 formed by a surface activation treatment performed on both surfaces of the composite material layer 2.

The multi-layered seamless belt 21 according to the present invention shown in FIG. 11 is a multi-layered seamless belt comprising a single composite material layer 2 composed of a fluorine resin 2a and a seamless belt substrate containing heat-resistant fibers 2b, a surface layer composed of silicone rubber 3b on the inner surface, and a surface layer composed of a polyimide resin 3a on the outer surface, wherein the surface layers 3b and 3a are formed through treated surfaces 4 formed by a surface activation treatment performed on both surfaces of the composite material layer 2.

The multi-layered seamless belt 22 according to the present invention shown in FIG. 12 is a multi-layered seamless belt comprising a single composite material layer 2 composed of a fluorine resin 2a and a seamless belt substrate containing heat-resistant fibers 2b, a surface layer composed of a polyimide resin 3a on the inner surface, and a surface layer composed of fluororubber 3c on the outer surface, wherein the surface layers 3a and 3c are formed through treated surfaces 4 formed by a surface activation treatment performed on both surfaces of the composite material layer 2.

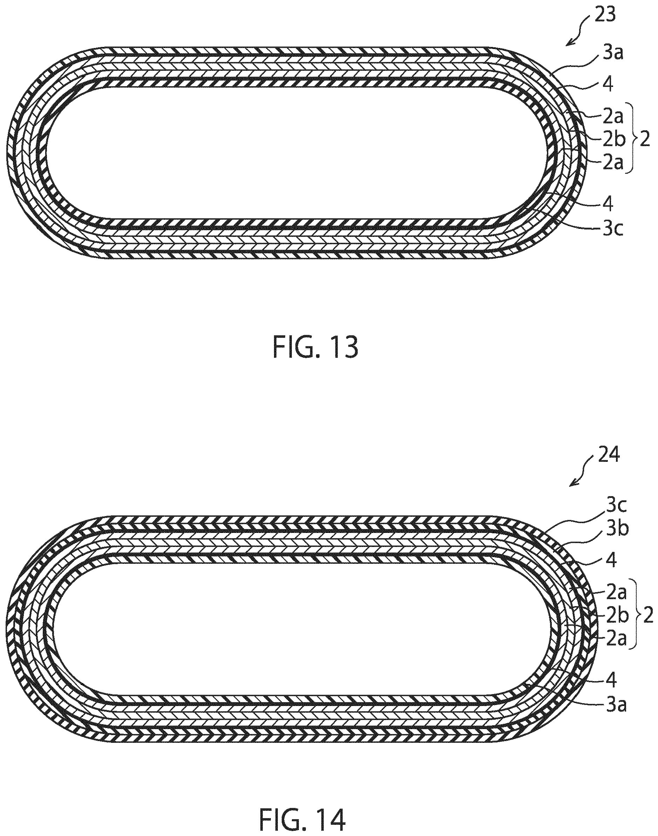

The multi-layered seamless belt 23 according to the present invention shown in FIG. 13 is a multi-layered seamless belt comprising a single composite material layer 2 composed of a fluorine resin 2a and a seamless belt substrate containing heat-resistant fibers 2b, a surface layer composed of fluororubber 3c on the inner surface, and a surface layer composed of a polyimide resin 3a on the outer surface, wherein the surface layers 3c and 3a are formed through treated surfaces 4 formed by a surface activation treatment performed on both surfaces of the composite material layer 2.

The multi-layered seamless belt 24 according to the present invention shown in FIG. 14 is a multi-layered seamless belt comprising a single composite material layer 2 composed of a fluorine resin 2a and a seamless belt substrate containing heat-resistant fibers 2b, a surface layer composed of a polyimide resin 3a on the inner surface, and a surface layer composed of silicone rubber 3b and a surface layer composed of fluororubber 3c on the outer surface, wherein the surface layers 3a and 3b are formed through treated surfaces 4 formed by a surface activation treatment performed on both surfaces of the composite material layer 2.

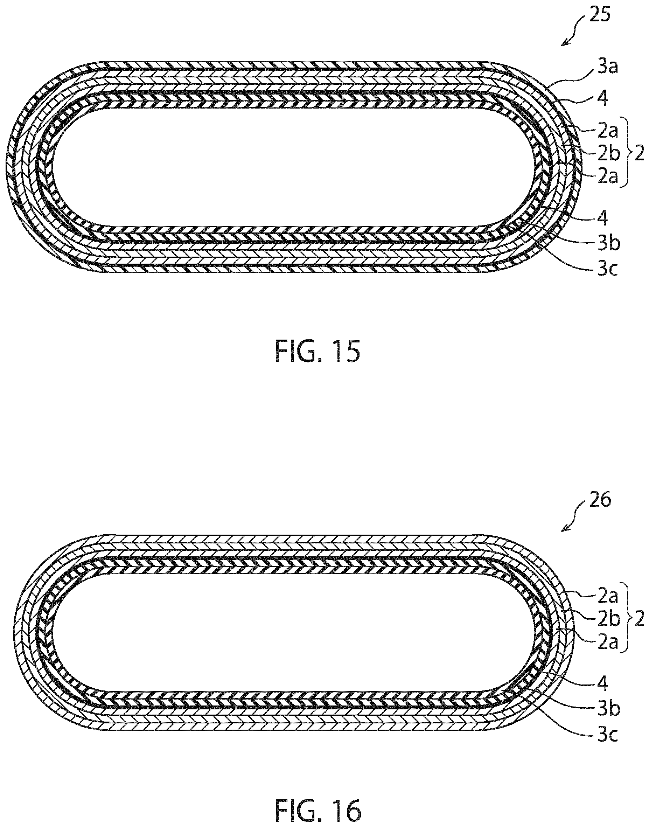

The multi-layered seamless belt 25 according to the present invention shown in FIG. 15 is a multi-layered seamless belt comprising a single composite material layer 2 composed of a fluorine resin 2a and a seamless belt substrate containing heat-resistant fibers 2b, a surface layer composed of silicone rubber 3b and a surface layer composed of fluororubber 3c on the inner surface, and a surface layer composed of a polyimide resin 3a on the outer surface, wherein the surface layers 3b and 3a are formed through treated surfaces 4 formed by a surface activation treatment performed on both surfaces of the composite material layer 2.

The multi-layered seamless belt 26 according to the present invention shown in FIG. 16 is a multi-layered seamless belt comprising a single composite material layer 2 composed of a fluorine resin 2a and a seamless belt substrate containing heat-resistant fibers 2b, and a surface layer composed of silicone rubber 3b and a surface layer composed of fluororubber 3c on the inner surface, wherein the surface layer 3b is formed through a treated surface 4 formed by a surface activation treatment performed on one surface of the composite material layer 2.

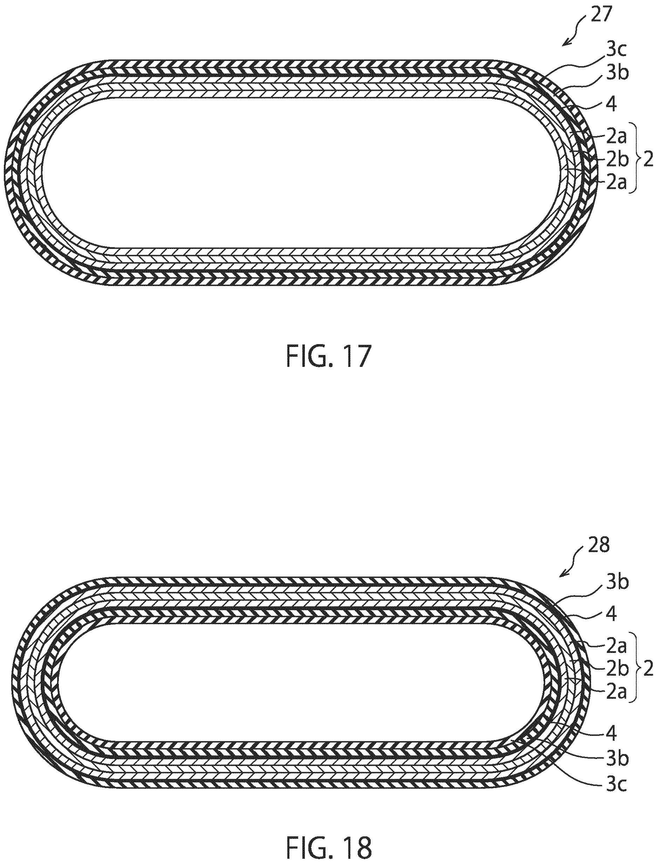

The multi-layered seamless belt 27 according to the present invention shown in FIG. 17 is a multi-layered seamless belt comprising a single composite material layer 2 composed of a fluorine resin 2a and a seamless belt substrate containing heat-resistant fibers 2b, and a surface layer composed of silicone rubber 3b and a surface layer composed of fluororubber 3c on the outer surface, wherein the surface layer 3b is formed through a treated surface 4 formed by a surface activation treatment performed on one surface of the composite material layer 2.

The multi-layered seamless belt 28 according to the present invention shown in FIG. 18 is a multi-layered seamless belt comprising a single composite material layer 2 composed of a fluorine resin 2a and a seamless belt substrate containing heat-resistant fibers 2b, surface layers composed of silicone rubber 3b on both surfaces, and a surface layer composed of fluororubber 3c on the inner surface, wherein the surface layers 3b are formed through treated surfaces 4 formed by a surface activation treatment performed on both surfaces of the composite material layer 2.

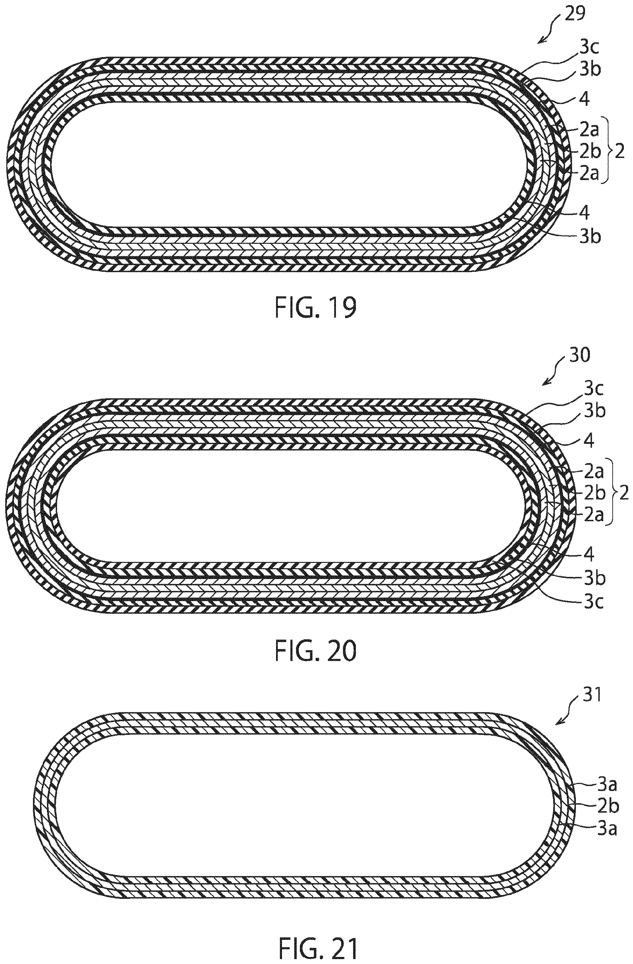

The multi-layered seamless belt 29 according to the present invention shown in FIG. 19 is a multi-layered seamless belt comprising a single composite material layer 2 composed of a fluorine resin 2a and a seamless belt substrate containing heat-resistant fibers 2b, surface layers composed of silicone rubber 3b on both surfaces, and a surface layer composed of fluororubber 3c on the outer surface, wherein the surface layers 3b are formed through treated surfaces 4 formed by a surface activation treatment performed on both surfaces of the composite material layer 2.

The multi-layered seamless belt 30 according to the present invention shown in FIG. 20 is a multi-layered seamless belt comprising a single composite material layer 2 composed of a fluorine resin 2a and a seamless belt substrate containing heat-resistant fibers 2b, surface layers composed of silicone rubber 3b on both surfaces, and surface layers composed of fluororubber 3c on both surfaces, wherein the surface layers 3b are formed through treated surfaces 4 formed by a surface activation treatment performed on both surfaces of the composite material layer 2.

The multi-layered seamless belt 31 according to the present invention shown in FIG. 21 is a multi-layered seamless belt comprising a seamless belt substrate containing heat-resistant fibers 2b and surface layers composed of a polyimide resin 3a on both surfaces.

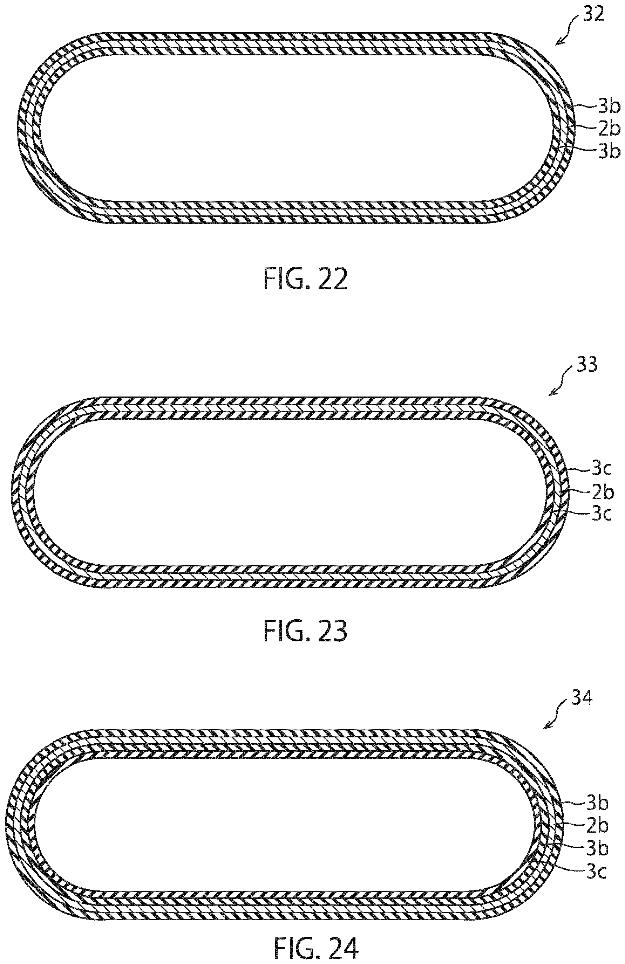

The multi-layered seamless belt 32 according to the present invention shown in FIG. 22 is a multi-layered seamless belt comprising a seamless belt substrate containing heat-resistant fibers 2b and surface layers composed of silicone rubber 3b on both surfaces.

The multi-layered seamless belt 33 according to the present invention shown in FIG. 23 is a multi-layered seamless belt comprising a seamless belt substrate containing heat-resistant fibers 2b and surface layers composed of fluororubber 3c on both surfaces.

The multi-layered seamless belt 34 according to the present invention shown in FIG. 24 is a multi-layered seamless belt comprising a seamless belt substrate containing heat-resistant fibers 2b, surface layers composed of silicone rubber 3b on both surfaces, and a surface layer composed of fluororubber 3c on the inner surface.

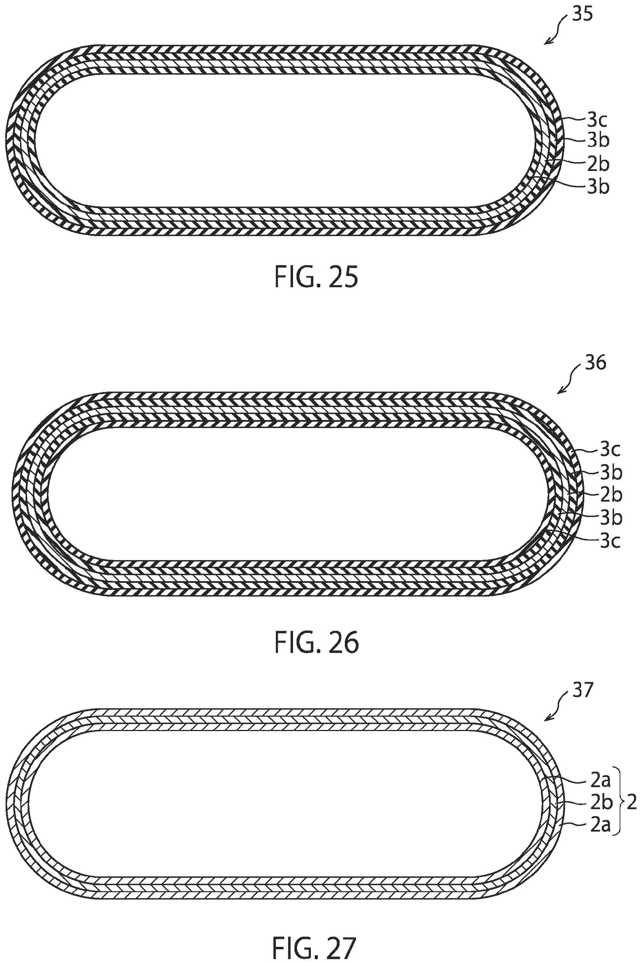

The multi-layered seamless belt 35 according to the present invention shown in FIG. 25 is a multi-layered seamless belt comprising a seamless belt substrate containing heat-resistant fibers 2b, surface layers composed of silicone rubber 3b on both surfaces, and a surface layer composed of fluororubber 3c on the outer surface.

The multi-layered seamless belt 36 according to the present invention shown in FIG. 26 is a multi-layered seamless belt comprising a seamless belt substrate containing heat-resistant fibers 2b, surface layers composed of silicone rubber 3b on both surfaces, and surface layers composed of fluororubber 3c on both surfaces.

The multi-layered seamless belt 37 according to the present invention shown in FIG. 27 is a multi-layered seamless belt comprising a seamless belt substrate containing heat-resistant fibers 2b and surface layers composed of a fluorine resin 2a on both surfaces.

The circumference of the multi-layered seamless belt according to the present invention can be appropriately changed depending on the specific application, purpose, and the like. The circumference is preferably 30 to 5,000 mm, particularly preferably 200 to 3,600 mm. The multi-layered seamless belt having a circumference within the above range is suitable as a heat-resistant and non-adhesive conveyor and heat treatment belt used in the industrial sector. For example, such a multi-layered seamless belt is especially suitable for the application in a heat sealing machine (for example, a heat welding machine for a packaging film or the like) or an interlining fusing machine (for example, a machine for heating and fusing a glued outer material and an interlining when an interlining used in a hard part such as a collar or a sleeve of a shirt or the like is fabricated). Furthermore, the multi-layered seamless belt can be designed so as to have an optimal circumference depending on the use conditions (for example, product dimensions, welding dimensions, production rate, processing temperature, and the like) upon the production with the above-mentioned machines. The circumference of less than 30 mm or more than 5,000 mm tends to result in difficult production. The circumference herein refers to the length of the inner circumferential surface of the seamless belt under the condition that no tension is applied to the seamless belt.

Conventionally, joint belts were used for multi-layered belts having the circumference, but the present invention has allowed for the use of multi-layered seamless belts. Thus, an endless belt which has no joint part, which has less conditional unevenness and reduced thickness, and which has excellent strength and durability, heat resistance, non-adhesiveness, abrasion resistance and grip performance can be provided.

### <Composite material layer>

The composite material layer of the multi-layered seamless belt according to the present invention comprises a seamless belt substrate containing heat-resistant fibers, and a fluorine resin.

Examples of the fluorine resin in the present invention include, but are not limited to, heat-resistant resins selected from the group consisting of polytetrafluoroethylene (PTFE), tetrafluoroethylene-perfluoroalkylvinyl ether copolymers (PFA), and tetrafluoroethylene-hexafluoropropylene copolymer (FEP). Among them, polytetrafluoroethylene is particularly preferred.

Conductive powder can be blended to the fluorine resin as needed. In this case, it is possible to impart or improve conductivity, antistatic property and heat conductivity, to improve abrasion resistance, and the like. Preferred specific examples of the conductive powder include carbon black and conductive titanium oxide. The blending amount thereof is preferably 1 to 40 parts by mass with respect to the fluorine resin.

In the present invention, examples of the seamless belt substrate containing heat-resistant fibers include, but are not limited to, woven fabrics composed of glass fibers or aramid fibers. The thickness of the seamless belt substrate is generally from 30 to 1,000 µm, particularly preferably from 30 to 700 µm. The thickness of the seamless belt substrate within the above range is suitable as a heat-resistant and non-adhesive conveyor and heat treatment belt in the industrial sector. The thickness of the surface layer of less than 30 µm results in difficult weaving and reduced strength. On the other hand, when the thickness exceeds 1000 µm, overengineering tends to occur.

Conventionally, for heat-resistant fibers having the above thickness, a belt was formed by joining a multi-layered sheet. However, the present invention has allowed for the multi-layering of a seamless belt. Thus, an endless belt which has no joint part, which has less conditional unevenness and reduced thickness, and which has excellent strength and durability, heat resistance, non-adhesiveness, abrasion resistance and grip performance can be provided.

As the weaving pattern, heat-resistant fibers selected from the group consisting of plain weave, mesh weave, twill weave, and satin weave can be included. Among them, plain weave is particularly preferred.

Such a composite material layer can be preferably formed, for example, by impregnating the above-mentioned seamless woven fabric of heat-resistant fibers with an aqueous suspension of the above-mentioned fluorine resin particles, drying and then baking the resulting seamless woven fabric. As a solvent for preparing the aqueous suspension, examples thereof include water, and particularly preferably pure water. The amount of the fluorine resin particles in the aqueous suspension is preferably 20 to 60 parts by mass, particularly preferably 30 to 60 parts by mass with respect to 100 parts by mass of the solvent.

In the composite material layer of the present invention, it is preferred that the fluorine resin sufficiently penetrates the inside of the seamless belt substrate, and that the surface of the seamless belt substrate is covered with the fluorine resin. Therefore, the application amount of the fluorine resin is preferably 10 to 80 parts by mass, particularly preferably from 40 to 70 parts by mass, based on the total amount of the woven fabric of the seamless belt substrate and the fluorine resin as 100 parts by mass.

### <Surface layer>

The multi-layered seamless belt according to the present invention has a surface layer composed of a fluorine resin, a polyimide resin, silicone rubber or fluororubber.

In the present invention, examples of the polyimide resin preferably include, but are not limited to, polyimide and polyamide imide, and particularly preferably polyimide.

In the present invention, when the surface layer is formed by coating, a liquid polyimide varnish can be used to facilitate the coating. A solvent can be added as necessary. Thus, the viscosity can be reduced, and the coating property can be improved.

The liquid polyimide varnish preferably has a viscosity of 1 to 8000 Cp, and particularly preferably 10 to 1000 Cp.

Conductive powder can be blended to the polyimide as needed. In this case, it is possible, for example, to impart or improve conductivity, antistatic property and heat conductivity, to improve abrasion resistance, and the like.

In the present invention, particularly preferred examples of the silicone rubber include, but are not limited to, liquid silicone rubber.

In the present invention, when the surface layer is formed by coating, a solvent can be added as necessary to the silicone rubber to facilitate the coating. Thus, the viscosity can be reduced, and the coating property can be improved.

The silicone rubber preferably has a viscosity of 1 to 100,000 Cp, and particularly preferably 10 to 50,000 Cp.

Conductive powder can be blended to the silicone rubber as needed. In this case, it is possible, for example, to impart or improve conductivity, antistatic property and heat conductivity, to improve abrasion resistance, and the like. Furthermore, a curing accelerator or a curing retarder can be added to the silicone rubber as needed.

In the present invention, particularly preferred examples of the fluororubber include, but are not limited to, liquid fluororubber. In the present invention, when the surface layer is formed by coating, a solvent can be added as necessary to the fluororubber to facilitate the coating. Thus, the viscosity can be reduced, and the coating property can be improved. The fluororubber preferably has a viscosity of 1 to 300,000 Cp, and particularly preferably 10 to 1,000 Cp.

Conductive powder can be blended to the fluororubber as needed. In this case, it is possible, for example, to impart or improve conductivity, antistatic property and heat conductivity, to improve abrasion resistance, and the like.

Furthermore, a curing accelerator or a curing retarder can be added to the fluororubber as needed.

The above-described surface layer can be formed by applying the above-mentioned polyimide resin, silicone rubber, or fluororubber to a treated surface by surface activation of the composite material layer, followed by drying and baking. The baking temperature of the polyimide resin is preferably 300 to 400°C, particularly preferably 330 to 370°C. The baking temperature of the silicone rubber is preferably 50 to 200°C, particularly preferably 50 to 150°C. The baking temperature of the fluororubber is preferably 20 to 200°C, particularly preferably 20 to 150°C. The baking time can be appropriately determined according to the baking temperature and the like.

The thickness of the surface layer can be appropriately determined depending on the specific application, purpose, and the like of the multi-layered seamless belt according to the present invention. The thickness of the fluorine resin surface layer is preferably 1 to 300 µm, particularly preferably 5 to 200 µm, and the thickness of the polyimide resin surface layer is preferably 1 to 300 µm, particularly preferably 5 to 200 µm, and the thickness of the silicone rubber surface layer is preferably 1 to 700 µm, particularly preferably 10 to 500 µm, and the thickness of the fluororubber surface layer is preferably 1 to 700 µm, particularly preferably 10 to 500 µm. As described above, when the surface layer composed of a single material is formed on one surface of the multi-layered seamless belt (that is, either the inner surface or the outer surface of the multi-layered seamless belt), the thickness of the surface layer is within the above range. When the surface layer composed of a single material is formed on both surfaces of the multi-layered seamless belt (that is, both the inner surface and the outer surface of the multi-layered seamless belt), the thickness of each surface layer on each surface is within the above range. When a surface layer in which a plurality of different material layers are laminated is formed on one or both surfaces of the multi-layered seamless belt, the thickness of each material layer is within the above range. When the thickness of the surface layer of the multi-layered seamless belt is within the above range, as a heat-resistant and non-adhesive conveyor and heat treatment belt in the industrial sector, various characteristics such as durability, heat resistance, non-adhesiveness, abrasion resistance, and grip performance can be maintained at a good level for a long time. When the thickness of the surface layer is less than the above range, the above-mentioned performance cannot be satisfying. On the other hand, when the thickness exceeds the above range, overengineering tends to occur.

Conventionally, joint belts were used for the multi-layered belts having the above-mentioned thickness, but the present invention has allowed for the use of multi-layered seamless belts. Thus, an endless belt which has no joint part, which has less conditional unevenness and reduced thickness, and which has excellent strength and durability, heat resistance, non-adhesiveness, abrasion resistance and grip performance can be provided.

### <Surface activation treatment>

In the multi-layered seamless belt according to the present invention, the above-described surface layer is preferably formed through a treated surface formed by a surface activation treatment performed on the above-described composite material layer. The surface activation treatment herein is a treatment of the above-described fluorine resin on the surface of the composite material layer of the present invention to reduce its surface tension, thereby allowing the fluorine resin of the composite material layer and a polyimide resin, silicone rubber, or fluororubber formed as a surface layer of the multi-layered seamless belt to be joined, and further exhibiting sufficient joining strength. When the surface activation treatment is not performed, a surface layer composed of a polyimide resin, silicone rubber, or fluororubber cannot be formed on the above-described composite material, and the object of the present invention cannot be achieved.

Preferred examples of the surface activation treatment in the present invention include a baking treatment for silica particle adhesion, a metal sodium etching treatment, a plasma discharge treatment, and a corona discharge treatment. Among these, a baking treatment for silica particle adhesion is particularly preferred.

The details of the surface activation treatment in the present invention will be described as follows.

Baking treatment for silica particle adhesion: a mixed aqueous suspension of silica particles and fluorine resin particles is applied to the surface of the composite material layer composed of a fluorine resin and a seamless woven fabric of heat-resistant fibers, and then a baking treatment is performed to improve the hydrophilicity of the surface of the composite material layer.

Metal sodium etching surface treatment: a solution of metal sodium is applied to the surface of the composite material layer composed of a fluorine resin and a seamless woven fabric of heat-resistant fibers to improve the hydrophilicity of the surface of the composite material layer.

Plasma discharge treatment: the surface of the composite material layer composed of a fluorine resin and a seamless woven fabric of heat-resistant fibers is subjected to a glow discharge treatment to improve the hydrophilicity of the surface of the composite material layer.

Corona discharge treatment: the surface of the above-described composite material layer composed of a fluorine resin and a seamless woven fabric of heat-resistant fibers is subjected to a corona discharge treatment to improve the hydrophilicity of the surface of the composite material layer.

The surface activation treatment is preferably performed on the entire surface of the composite material layer where the surface layer is formed but can be also performed on a part of the composite material layer where the surface layer is formed.

By performing such a surface activation treatment, the contact angle (JIS K6768) when pure water is dropped on the fluorine resin-side surface of the composite material layer is significantly reduced. The contact angle, which is about 106° before the surface activation treatment is reduced to 80 to 90° by the baking treatment for silica particle adhesion, to 50 to 60° by the metal sodium etching surface treatment, and to 50 to 60° by the plasma discharge treatment.

Further, if necessary, a primer treatment can be performed. Thus, for example, the joint strength can be improved.

### <Width adjustment>

According to the present invention, by forming a wide multi-layered seamless belt and cutting this wide seamless belt into the desired width, several multi-layered seamless belts having the same length can be produced simultaneously. Furthermore, by adjusting the width when cutting the above-mentioned wide multi-layered seamless belt, it is easy to produce separately multi-layered seamless belts having different widths.

The width of the multi-layered seamless belt according to the present invention can be appropriately changed depending on the specific application, purpose, and the like. The width is preferably 4 to 1,500 mm, and particularly preferably 4 to 1,000 mm. The multi-layered seamless belt having a width within the above range is suitable as a heat-resistant and non-adhesive conveyor and heat treatment belt used in the industrial sector. For example, such a multi-layered seamless belt is especially suitable for the application in a heat sealing machine (for example, a heat welding machine for a packaging film or the like) or an interlining fusing machine (for example, a machine for heating and fusing a glued outer material and an interlining when an interlining used in a hard part such as a collar or a sleeve of a shirt or the like is fabricated). Furthermore, the multi-layered seamless belt can be designed so as to have an optimal width depending on the use conditions (for example, product dimensions, welding dimensions, production rate, processing temperature, and the like) upon the production with the above-mentioned machines. The width of less than 4 mm or more than 1,500 mm tends to result in difficult production.

Conventionally, joint belts were used for the multi-layered belts having the above-mentioned width, but the present invention has allowed for the use of multi-layered seamless belts. Thus, an endless belt which has no joint part, which has less conditional unevenness and reduced thickness, and which has excellent strength and durability, heat resistance, non-adhesiveness, abrasion resistance and grip performance can be provided.

### <Method of producing a multi-layered seamless belt>

The method of producing a multi-layered seamless belt according to the present invention comprises impregnating a seamless belt substrate containing heat-resistant fibers 2b with an aqueous suspension of fluorine resin particles, drying and then baking the resulting seamless belt substrate to form a composite material layer 2, and then applying a polyimide resin, silicone rubber or fluororubber to the composite material layer 2 to form a surface layer(s) 3a, 3b and/or 3c.

Especially, the preferred multi-layered seamless belt having a treated surface by surface activation 4 which is present between the composite material layer 2 and a surface layer 3a, 3b or 3c as shown in FIGS. 1 to 3 can be produced by impregnating a seamless belt substrate containing heat-resistant fibers 2b with an aqueous suspension of fluorine resin particles, drying and then baking the resulting seamless belt substrate to form a composite material layer 2, forming a treated surface by activation 4 by performing a baking treatment for silica particle adhesion, a metal sodium etching treatment, a plasma discharge treatment, or a corona discharge treatment onto this composite material layer 2, and then applying a polyimide resin, silicone rubber or fluororubber to form a surface layer 3a, 3b or 3c.

### EXAMPLES

The results of a comparative study of Examples considered to be preferred in the present invention and conventional methods and the like are shown below.

### <Example A1>

### (1) A multi-layered seamless belt in which a polyimide resin surface layer is formed on one surface of a composite material of a fluorine resin and a seamless woven fabric of glass fibers

In order to obtain a composite material of a fluorine resin and a seamless woven fabric of glass fibers, a seamless woven fabric of glass fibers (thickness: 95 µm) was impregnated with and adhered to an aqueous suspension of a fluorine resin (PTFE), dried at 80°C, and then baked at a temperature of 380°C. Thus, a composite material (thickness: 130 µm) of a fluorine resin and a seamless woven fabric of glass fibers was obtained.

Then, in order to perform a surface activation treatment on the composite material of the fluorine resin and the seamless woven fabric of glass fibers, 100 parts by mass of an aqueous suspension of a PTFE resin was mixed with 100 parts by mass of an aqueous suspension of silica. Thus, a solution for a surface activation treatment was obtained.

Next, the solution for a surface activation treatment was applied and adhered to one surface of the composite material of the fluorine resin and the seamless woven fabric of glass fibers, which was then dried at 80°C and baked at a temperature of 380°C, and thus silica was adhered by baking. Thus, a treated surface by surface activation was obtained.

Then, in order to obtain a liquid polyimide varnish, 100 parts by mass of a solvent (dimethylacetamide (DMAC)) was mixed with 100 parts by mass of the liquid polyimide varnish to obtain a liquid polyimide varnish having a viscosity of 50 Cp.

The above-described liquid polyimide varnish was applied and adhered to the above-described treated surface by surface activation of the composite material (thickness: 130 µm) of the fluorine resin and the seamless woven fabric of glass fibers, which was then dried at 80°C and baked at 350°C. Thus, a multi-layered seamless belt (thickness: 135 µm) having a polyimide resin surface layer formed on one surface of a composite material of a fluorine resin and a seamless woven fabric of glass fibers was obtained (FIGS. 1 and 4).

The fluorine resin layer surface of the composite material obtained as described above and the polyimide resin layer surface of the multi-layered seamless belt obtained as described above were compared by the following evaluation methods. Table 1 shows the evaluation results.
1) Abrasion test: performed in accordance with JIS H8682-1. (Measured using a Suga abrasion tester under the conditions of a speed of 40 times, a load of 0.8 kg, the number of tests of 300 times, a wear wheel (diameter of 50 mm, width of 12 mm) as a mating material and a #4000 waterproof film.)
2) Coefficient of friction: performed in accordance with JIS K7125. (Measured using a friction coefficient tester manufactured by Shimadzu Corporation, with a sliding speed of 100 mm/min, a load of 200 g, and SUS304 as a mating material.)
3) Contact angle: performed in accordance with JIS K6768. (Measured using a contact angle meter CA-D manufactured by Kyowa Interface Science Co., Ltd and using distilled water as the test solution.)

### [Table 1]

**Table 1**

| Test items | Fluorine resin layer surface (PTFE) | Polyimide resin layer surface |
|---|---|---|
| Wear amount (mg) | 0.50 | 0.13 |
| Coefficient of dynamic friction | 0.09 | 0.28 |
| Contact angle (°) | 106 | 95 |

According to the above evaluation results, compared to the fluorine resin, the polyimide resin is superior in abrasion resistance, and inferior in non-adhesiveness and low friction property. These results showed that the polyimide resin was harder to wear and slip than the fluorine resin.

The suitable structure of Example A1 includes, but is not limited to, a structure in which a fluorine resin surface is used on the workpiece side where non-adhesiveness and low friction property are important, and a polyimide resin surface is used on the workpiece non-contact side where abrasion resistance and grip performance are important.

### <Example B1>

### (2) A multi-layered seamless belt in which a silicone rubber surface layer is formed on one surface of a composite material of a fluorine resin and a seamless woven fabric of glass fibers

A composite material (thickness: 130 µm) of a fluorine resin and a seamless woven fabric of glass fibers was obtained in the same manner as in Example A1. A treated surface by surface activation was obtained on one surface of this composite material in the same manner as in Example A1. In order to obtain a liquid silicone rubber, 10 parts by mass of an organic solvent (toluene) was mixed with 100 parts by mass of a liquid silicone rubber, and 10 parts by mass of a curing agent was further mixed to obtain a liquid silicone rubber having a viscosity of 50,000 Cp.

The above-described liquid silicone rubber was applied and adhered to the treated surface by surface activation of the composite material, which was then cured at 90°C to form a silicone rubber surface layer. Thus, a multi-layered seamless belt (thickness: 195 µm) having a silicone rubber surface layer formed on one surface of a composite material was obtained (FIGS. 2 and 5).

The fluorine resin layer surface and the silicone rubber layer surface obtained as described above in Example B1 were compared. Table 2 shows the evaluation results.

### [Table 2]

**Table 2**

| Test items | Fluorine resin layer surface (PTFE) | Silicone rubber layer surface |
|---|---|---|
| Wear amount (mg) | 0.50 | 0.37 |
| Coefficient of dynamic friction | 0.09 | 1.22 |
| Contact angle (°) | 106 | 104 |

According to the above evaluation results, the silicone rubber is inferior to the fluorine resin in non-adhesiveness and low friction property. These results showed that the silicone rubber was harder to slip than the fluorine resin.

The suitable structure of the endless belt of Example B1 includes, but is not limited to, a structure in which a fluorine resin surface is used on the workpiece side where non-adhesiveness and low friction property are important, and a silicone rubber surface is used on the workpiece non-contact side where grip performance is important.

### <Example C1>

### (3) A multi-layered seamless belt in which a fluororubber surface layer is formed on one surface of a composite material of a fluorine resin and a seamless woven fabric of glass fibers

A composite material (thickness: 130 µm) of a fluorine resin and a seamless woven fabric of glass fibers was obtained in the same manner as in Example A1. A treated surface by surface activation was obtained on one surface of this composite material in the same manner as in Example A1. In order to obtain a liquid fluororubber, 10 parts by mass of an organic solvent (MEK) was mixed with 100 parts by mass of the liquid fluororubber, and 10 parts by mass of a curing agent was further mixed to obtain a liquid fluororubber having a viscosity of 1,000 Cp.

The above-described liquid fluororubber was applied and adhered to the treated surface by surface activation of the composite material, which was then cured at 60°C to form a fluororubber surface layer. Thus, a multi-layered seamless belt (thickness: 150 µm) having a fluororubber surface layer formed on one surface of a composite material was obtained (FIGS. 3 and 6).

The fluorine resin layer surface and the fluororubber layer surface obtained as described above in Example C1 were compared.

Table 3 shows the evaluation results.

### [Table 3]

**Table 3**

| Test items | Fluorine resin layer surface (PTFE) | Fluororubber layer surface |
|---|---|---|
| Wear amount (mg) | 0.50 | 0.23 |
| Coefficient of dynamic friction | 0.09 | 1.10 |
| Contact angle (°) | 106 | 91 |

According to the above evaluation results, the fluororubber is inferior to the fluorine resin in non-adhesiveness and low friction property. These results showed that the fluororubber was harder to slip than the fluorine resin.

The suitable structure of the endless belt of Example C1 includes, but is not limited to, a structure in which a fluorine resin surface is used on the workpiece side where non-adhesiveness and low friction property are important, and a fluororubber surface is used on the workpiece non-contact side where grip performance is important.

### <Example A2>

### (4) A multi-layered seamless belt in which polyimide resin surface layers are formed on both surfaces of a composite material of a fluorine resin and a seamless woven fabric of glass fibers

A composite material (thickness: 130 µm) of a fluorine resin and a seamless woven fabric of glass fibers was obtained in the same manner as in Example A1. Treated surfaces by surface activation and polyimide resin surface layers were formed in the same manner as in Example A1 on both surfaces of the composite material, and thus, a multi-layered seamless belt (thickness: 140 µm) having polyimide resin surface layers formed on both surfaces of a composite material was obtained (FIG. 7).

The structure of Example A2 is suitable for, but is not limited to, use in applications where abrasion resistance and grip performance are important.

### <Example B2>

### (5) A multi-layered seamless belt in which silicone rubber surface layers are formed on both surfaces of a composite material of a fluorine resin and a seamless woven fabric of glass fibers

A composite material (thickness: 130 µm) of a fluorine resin and a seamless woven fabric of glass fibers was obtained in the same manner as in Example A1. Treated surfaces by surface activation and silicone rubber surface layers were formed in the same manner as in Example B1 on both surfaces of the composite material, and thus, a multi-layered seamless belt (thickness: 260 µm) having silicone rubber surface layers formed on both surfaces of the composite material was obtained (FIG. 8).

The structure of Example B2 is suitable for, but is not limited to, use in applications where grip performance is important.

### <Example C2>

### (6) A multi-layered seamless belt in which fluororubber surface layers are formed on both surfaces of a composite material of a fluorine resin and a seamless woven fabric of glass fibers

A composite material (thickness: 130 µm) of a fluorine resin and a seamless woven fabric of glass fibers was obtained in the same manner as in Example A1. Treated surfaces by surface activation and fluororubber surface layers were formed in the same manner as in Example C1 on both surfaces of the composite material, and thus, a multi-layered seamless belt (thickness: 170 µm) having fluororubber surface layers formed on both surfaces of the composite material was obtained (FIG. 9).

The structure of Example C2 is suitable for, but is not limited to, use in applications where grip performance is important.

### <Example A3>

### (7) A multi-layered seamless belt in which a polyimide resin surface layer is formed on one surface of a composite material of a fluorine resin and a seamless woven fabric of glass fibers, and a silicone rubber surface layer is formed on the other surface

A composite material (thickness: 130 µm) of a fluorine resin and a seamless woven fabric of glass fibers was obtained in the same manner as in Example A1. Treated surfaces by surface activation were formed on both surfaces of this composite material in the same manner as in Example A1. A polyimide resin surface layer was formed in the same manner as in Example A1 on one surface of this composite material, and a silicone rubber surface layer was formed in the same manner as in Example B1 on the other surface. Thus, a multi-layered seamless belt (thickness: 200 µm) in which a polyimide resin surface layer was formed on one surface of a composite material of a fluorine resin and a seamless woven fabric of glass fibers, and a silicone rubber surface layer was formed on the other surface was obtained (FIGS. 10 and 11).

The polyimide resin surface and the silicone rubber layer surface of the multi-layered sheet obtained as described above in Example A3 were compared. Table 4 shows the evaluation results.

### [Table 4]

**Table 4**

| Test items | Polyimide resin layer surface | Silicone rubber layer surface |
|---|---|---|
| Wear amount (mg) | 0.13 | 0.37 |
| Coefficient of dynamic friction | 0.28 | 1.22 |
| Contact angle (°) | 95 | 104 |

According to the above evaluation results, compared to the polyimide resin, the silicone rubber is superior in non-adhesiveness, and inferior in abrasion resistance and low friction property. These results showed that the silicone rubber was harder to slip than the polyimide resin.

The suitable structure of Example A3 includes, but is not limited to, a structure in which a silicone rubber surface is used on the workpiece side where non-adhesiveness and grip performance are important, and a polyimide resin surface is used on the workpiece non-contact side where abrasion resistance is important.

### <Example A4>

### (8) A multi-layered seamless belt in which a polyimide resin surface layer is formed on one surface of a composite material of a fluorine resin and a seamless woven fabric of glass fibers and a fluororubber surface layer is formed on the other surface

A composite material (thickness: 130 µm) of a fluorine resin and a seamless woven fabric of glass fibers was obtained in the same manner as in Example A1. Treated surfaces by surface activation were formed on both surfaces of this composite material in the same manner as in Example A1. A polyimide resin surface layer was formed in the same manner as in Example A1 on one surface of this composite material, and a fluororubber surface layer was formed in the same manner as in Example C1 on the other surface. Thus, a multi-layered seamless belt (thickness: 155 µm) in which a polyimide resin surface layer was formed on one surface of a composite material of a fluorine resin and a seamless woven fabric of glass fibers, and a fluororubber surface layer was formed on the other surface was obtained (FIGS. 12 and 13).

The polyimide resin surface and the fluororubber layer surface of the multi-layered sheet obtained as described above in Example A4 were compared. Table 5 shows the evaluation results.

### [Table 5]

**Table 5**

| Test items | Polyimide resin layer surface | Fluororubber layer surface |
|---|---|---|
| Wear amount (mg) | 0.13 | 0.23 |
| Coefficient of dynamic friction | 0.28 | 1.10 |
| Contact angle (°) | 95 | 91 |

According to the above evaluation results, the fluororubber is inferior to the polyimide resin in abrasion resistance and low friction property. These results showed that the fluororubber was harder to slip than the polyimide resin.

The suitable structure of Example A4 includes, but is not limited to, a structure in which a fluororubber surface is used on the workpiece side where grip performance is important, and a polyimide resin surface is used on the workpiece non-contact side where abrasion resistance is important.

### <Example A5>

### (8) A multi-layered seamless belt in which a polyimide resin surface layer is formed on one surface of a composite material of a fluorine resin and a seamless woven fabric of glass fibers and silicone rubber and fluororubber surface layers are formed on the other surface

A composite material (thickness: 130 µm) of a fluorine resin and a seamless woven fabric of glass fibers was obtained in the same manner as in Example A1. Treated surfaces by surface activation were formed on both surfaces of this composite material in the same manner as in Example A1. A polyimide resin surface layer was formed in the same manner as in Example A1 on one surface of this composite material, and a silicone rubber surface layer was formed in the same manner as in Example B1 on the other surface. A fluororubber surface layer was further formed on this silicone rubber surface layer in the same manner as in Example C1. Thus, a multi-layered seamless belt (thickness: 220 µm) in which a polyimide resin surface layer was formed on one surface of a composite material of a fluorine resin and a seamless woven fabric of glass fibers, and silicone rubber and fluororubber surface layers were formed on the other surface was obtained (FIGS. 14 and 15).

The suitable structure of Example A5 includes, but is not limited to, a structure in which a fluororubber surface is used on the workpiece side where grip performance and the absence of silicone component migration are important, and a polyimide resin surface is used on the workpiece non-contact side where abrasion resistance is important.

### <Example B4>

### (9) A multi-layered seamless belt in which silicone rubber and fluororubber surface layers are formed on one surface of a composite material of a fluorine resin and a seamless woven fabric of glass fibers

A composite material (thickness: 130 µm) of a fluorine resin and a seamless woven fabric of glass fibers was obtained in the same manner as in Example A1. A treated surface by surface activation was obtained on one surface of this composite material in the same manner as in Example A1. A silicone rubber surface layer was formed in the same manner as in Example B1 on one surface of this composite material. A fluororubber surface layer was further formed on this silicone rubber surface layer in the same manner as in Example C1. Thus, a multi-layered seamless belt (thickness: 215 µm) in which silicone rubber and fluororubber surface layers were formed on one surface of a composite material of a fluorine resin and a seamless woven fabric of glass fibers was obtained (FIGS. 16 and 17).

The suitable structure of Example B4 includes, but is not limited to, a structure in which a fluorine resin surface is used on the workpiece side where non-adhesiveness and low friction property are important, and a fluororubber surface is used on the workpiece non-contact side where grip performance and the absence of silicone component migration are important.

### <Example B5>

### (10) A multi-layered seamless belt in which silicone rubber surface layers are formed on both surfaces of a composite material of a fluorine resin and a seamless woven fabric of glass fibers and a fluororubber surface layer is formed on one surface

A composite material (thickness: 130 µm) of a fluorine resin and a seamless woven fabric of glass fibers was obtained in the same manner as in Example A1. Treated surfaces by surface activation was formed on both surfaces of this composite material in the same manner as in Example A1. Silicone rubber surface layers were formed in the same manner as in Example B1 on both surfaces of this composite material, and a fluororubber surface layer was formed in the same manner as in Example C1 on one surface of these silicone rubber surface layers. Thus, a multi-layered seamless belt (thickness: 280 µm) in which silicone rubber surface layers were formed on both surfaces of a composite material of a fluorine resin and a seamless woven fabric of glass fibers, and a fluororubber surface layer was formed on one surface was obtained (FIGS. 18 and 19).

The suitable structure of Example B5 includes, but is not limited to, a structure in which a fluororubber surface is used on the workpiece contact side where grip performance and the absence of silicone component migration are important, and a silicone rubber surface is used on the workpiece non-contact side where grip performance is more important.

### <Example B6>

### (11) A multi-layered seamless belt in which silicone rubber and fluororubber surface layers are formed on both surfaces of a composite material of a fluorine resin and a seamless woven fabric of glass fibers

A composite material (thickness: 130 µm) of a fluorine resin and a seamless woven fabric of glass fibers was obtained in the same manner as in Example A1. Treated surfaces by surface activation was formed on both surfaces of this composite material in the same manner as in Example A1. Silicone rubber layers were formed in the same manner as in Example B1 on both surfaces of this composite material, and fluororubber was formed in the same manner as in Example C1 on two surfaces of these silicone rubber layers. Thus, a multi-layered seamless belt (thickness: 300 µm) in which silicone rubber and fluororubber surface layers were formed on both surfaces of a composite material of a fluorine resin and a seamless woven fabric of glass fibers was obtained (FIG. 20).

The structure of Example B6 is suitable for, but is not limited to, use in applications where grip performance and the absence of silicone component migration are important.

### <Example A6>

### (12) A multi-layered seamless belt in which polyimide resin surface layers are formed on both surfaces of a seamless woven fabric of glass fibers

Polyimide resin surface layers were formed in the same manner as in Example A1 on both surfaces of the seamless woven fabric of glass fibers. Thus, a multi-layered seamless belt (thickness: 130 µm) having polyimide resin surface layers formed on both surfaces of a seamless woven fabric of glass fibers was obtained (FIG. 21).

The structure of Example A6 is suitable for, but is not limited to, use in applications where abrasion resistance and grip performance are important.

### <Example B7>

### (13) A multi-layered seamless belt in which silicone rubber layers are formed on both surfaces of a seamless woven fabric of glass fibers

Silicone rubber surface layers were formed in the same manner as in Example B1 on both surfaces of the seamless woven fabric of glass fibers. Thus, a multi-layered seamless belt (thickness: 130 µm) having silicone rubber surface layers formed on both surfaces of a seamless woven fabric of glass fibers was obtained (FIG. 22).

The structure of Example B7 is suitable for, but is not limited to, use in applications where wear resistance and grip performance are important.

### <Example C4>

### (14) A multi-layered seamless belt in which fluororubber layers are formed on both surfaces of a seamless woven fabric of glass fibers

Fluororubber surface layers were formed in the same manner as in Example C1 on both surfaces of the seamless woven fabric of glass fibers. Thus, a multi-layered seamless belt (thickness: 130 µm) having fluororubber surface layers formed on both surfaces of a seamless woven fabric of glass fibers was obtained (FIG. 23).

The structure of Example C4 is suitable for, but is not limited to, use in applications where wear resistance and grip performance are important.

### <Example B8>

### (15) A multi-layered seamless belt in which silicone rubber layers are formed on both surfaces of a composite material of a seamless woven fabric of glass fibers and a fluororubber layer is formed on one surface

Silicone rubber surface layers were formed in the same manner as in Example B1 on both surfaces of the seamless woven fabric of glass fibers, and a fluororubber surface layer was formed in the same manner as in Example C1 on one surface of the silicone rubber layers. Thus, a multi-layered seamless belt (thickness: 150 µm) in which silicone rubber layers were formed on both surfaces of a seamless woven fabric of glass fibers, and a fluororubber layer was formed on one surface was obtained (FIGS. 24 and 25).

The suitable structure of Example B8 includes, but is not limited to, a structure in which a fluororubber surface is used on the workpiece contact side where grip performance and the absence of silicone component migration are important, and a silicone rubber surface is used on the workpiece non-contact side where grip performance is more important.

### <Example J1>

### (1) A multi-layered seamless belt in which fluorine resin surface layers are formed on both surfaces of a seamless woven fabric of glass fibers

Fluorine resin surface layers were formed in the same manner as in Example A1 on both surfaces of the seamless woven fabric of glass fibers. Thus, a multi-layered seamless belt (thickness: 130 µm) having fluorine resin surface layers formed on both surfaces of a seamless woven fabric of glass fibers was obtained (FIG. 27).

The structure of Example J1 is suitable for, but is not limited to, use in applications where non-adhesiveness and low friction property are important while grip performance is not important.

### <Example B9>

### (16) A multi-layered seamless belt in which silicone rubber layers and fluororubber layers are formed on both surfaces of a composite material of a seamless woven fabric of glass fibers

Silicone rubber surface layers were formed in the same manner as in Example B1 on both surfaces of the seamless woven fabric of glass fibers, and fluororubber surface layers were formed in the same manner as in Example C1 on both surfaces of the silicone rubber layers. Thus, a multi-layered seamless belt (thickness: 170 µm) having silicone rubber layers and fluororubber layers formed on both surfaces of a seamless woven fabric of glass fibers was obtained (FIG. 26).

The structure of Example B9 is suitable for, but is not limited to, applications where grip performance and the absence of silicone component migration are important.

### <Comparative Example A1>

A liquid polyimide varnish was applied to the composite material obtained in Example A1 without a surface activation treatment. The joining did not work, and a usable multi-layered seamless belt having sufficient joining strength could not be obtained.

### <Comparative Example B1>

A liquid silicone rubber was applied to the composite material obtained in Example A1 without a surface activation treatment. The joining did not work, and a usable multi-layered seamless belt having sufficient joining strength could not be obtained.

### <Comparative Example C1>

A liquid fluororubber was applied to the composite material obtained in Example A1 without a surface activation treatment. The joining did not work, and a usable multi-layered seamless belt having sufficient joining strength could not be obtained.

### <Comparative Example A2>

An endless belt in which a multi-layered sheet having a polyimide resin surface layer formed on one surface of a composite material of a fluorine resin and a woven fabric of glass fibers is entirely laminated and joined

In order to obtain a composite material of a fluorine resin and glass fibers, a plain weave fabric of glass fibers (thickness: 50 µm) was impregnated with and adhered to an aqueous suspension of a fluorine resin (PTFE), dried at 80°C, and then baked at a temperature of 380°C. Thus, a composite material (thickness: 80 µm) of a fluorine resin and glass fibers was obtained.

Furthermore, in order to obtain a composite material of a fluorine resin and glass fibers for lamination, a plain weave fabric of glass fibers (thickness: 30 µm) was impregnated with and adhered to an aqueous suspension of a fluorine resin (PTFE), dried at 80°C, and then baked at a temperature of 380°C. Thus, a composite material (thickness: 50 µm) of a fluorine resin and glass fibers was obtained.

Then, in order to perform a surface activation treatment on the composite material of the fluorine resin and glass fibers (thickness: 80 µm), 100 parts by mass of an aqueous suspension of a PTFE resin was mixed with 100 parts by mass of an aqueous suspension of silica. Thus, a solution for a surface activation treatment was obtained.

Next, the solution for a surface activation treatment was applied and adhered to one surface of the composite material of the fluorine resin and glass fibers, which was then dried at 80°C and baked at a temperature of 380°C, and thus silica was adhered by baking. Thus, a surface of a surface activation treatment layer was obtained.

Then, in order to obtain a liquid polyimide varnish, 100 parts by mass of a solvent (dimethylacetamide (DMAC)) was mixed with 100 parts by mass of the liquid polyimide varnish to obtain a liquid polyimide varnish having a viscosity of 50 Cp.

The above-described liquid polyimide varnish was applied and adhered to the above-described treated surface by surface activation of the composite material (thickness: 80 µm) of the fluorine resin and the glass fibers, which was then dried at 80°C and then baked at 350°C. Thus, a multi-layered sheet (thickness: 85 µm) having a polyimide resin surface layer formed on one surface of a composite material of a fluorine resin and glass fibers was obtained.

The multi-layered sheet in which the polyimide resin surface layer was formed on one surface of the composite material of the fluorine resin and glass fibers (thickness: 85 µm) and the composite material of the fluorine resin and glass fibers for lamination (thickness: 50 µm) were entirely laminated on fluorine resin layer surfaces to be endless, and thermally fused at a temperature of 350°C with a heating press machine. Thus, an endless belt (thickness: 135 µm) in which a multi-layered sheet having a polyimide resin surface layer formed on one surface of a composite material of a fluorine resin and a woven fabric of glass fibers was joined was obtained.

### <Comparative Example B2>

An endless belt in which a multi-layered sheet having a silicone rubber surface layer formed on one surface of a composite material of a fluorine resin and a woven fabric of glass fibers is entirely laminated and joined

A composite material (thickness: 80 µm) of a fluorine resin and glass fibers was obtained in the same manner as in Comparative Example A1. A composite material (thickness: 50 µm) of a fluorine resin and glass fibers for lamination was further obtained in the same manner as in Comparative Example A1. A treated surface by surface activation was formed on one surface of the above-mentioned composite material (thickness: 80 µm) in the same manner as in Comparative Example A1.

In order to obtain a liquid silicone rubber, 10 parts by mass of an organic solvent (toluene) was mixed with 100 parts by mass of a liquid silicone rubber, and 10 parts by mass of a curing agent was further mixed to obtain a liquid silicone rubber having a viscosity of 50,000 Cp.

The above-described liquid silicone rubber was applied and adhered to the treated surface by surface activation of the composite material, which was cured at 90°C to form a silicone rubber surface layer. Thus, a multi-layered sheet (thickness: 145 µm) having a silicone rubber surface layer formed on one surface of a composite material was obtained.

The above-described multi-layered sheet in which a silicone rubber surface layer was formed on one surface of the composite material of the fluorine resin and glass fibers (thickness: 145 µm) and the composite material of the fluorine resin and glass fibers for lamination (thickness: 50 µm) were entirely laminated on fluorine resin layer surfaces to be endless, and thermally fused at a temperature of 350°C with a heating press machine. Thus, an endless belt (thickness: 195 µm) in which a multi-layered sheet having a silicone rubber surface layer formed on one surface of a composite material of a fluorine resin and a woven fabric of glass fibers was joined was obtained.

### <Comparative Example C2>

An endless belt in which a multi-layered sheet having a fluororubber surface layer formed on one surface of a composite material of a fluorine resin and a woven fabric of glass fibers is entirely laminated

A composite material (thickness: 80 µm) of a fluorine resin and glass fibers was obtained in the same manner as in Comparative Example A1. A composite material (thickness: 50 µm) of a fluorine resin and glass fibers for lamination was further obtained in the same manner as in Comparative Example A1. A treated surface by surface activation was formed on one surface of the above-mentioned composite material (thickness: 80 µm) in the same manner as in Comparative Example A1.

In order to obtain a liquid fluororubber, 10 parts by mass of an organic solvent (MEK) was mixed with 100 parts by mass of the liquid fluororubber, and 10 parts by mass of a curing agent was further mixed to obtain a liquid fluororubber having a viscosity of 1,000 Cp.

The above-described liquid fluororubber was applied and adhered to the treated surface by surface activation of the composite material, which was then cured at 90°C to form a fluororubber surface layer. Thus, a multi-layered sheet (thickness: 100 µm) having a fluororubber surface layer formed on one surface of a composite material was obtained.

The above-described multi-layered sheet in which the fluororubber surface layer was formed on one surface of the composite material of the fluorine resin and glass fibers (thickness: 100 µm) and the composite material of the fluorine resin and glass fibers for multi-layering (thickness: 50 µm) were laminated on fluorine resin layer surfaces to be endless, and thermally fused at a temperature of 350°C with a heating press machine. Thus, an endless belt (thickness: 150 µm) in which a multi-layered sheet having a fluororubber surface layer formed on one surface of a composite material of a fluorine resin and a woven fabric of glass fibers was joined was obtained.

### <Comparative Example A3>

An endless belt (thickness: 265 µm) in a which multi-layered sheet having a polyimide resin surface layer formed on one surface of a composite material of a fluorine resin and a woven fabric of glass fibers is entirely laminated and joined

A composite material (thickness: 130 µm) of a fluorine resin and glass fibers was obtained in the same manner as in Comparative Example A2. A composite material (thickness: 130 µm) of a fluorine resin and glass fibers for lamination was further obtained in the same manner as in Comparative Example A2. A treated surface by surface activation and a polyimide resin surface layer were formed in the same manner as in Comparative Example A2, and thus, a multi-layered sheet (thickness: 135 µm) having a polyimide resin surface layer formed on one surface of a composite material of a fluorine resin and glass fibers was obtained.

In the same manner as in Comparative Example A2, the above-described multi-layered sheet in which a polyimide resin surface layer was formed on one surface of the composite material of the fluorine resin and glass fibers (thickness: 135 µm) and the composite material of the fluorine resin and glass fibers for lamination (thickness: 130 µm) were entirely laminated on fluorine resin layer surfaces to be endless, and thermally fused. Thus, an endless belt (thickness: 265 µm) in which a multi-layered sheet having a polyimide resin surface layer formed on one surface of a composite material of a fluorine resin and a woven fabric of glass fibers was joined was obtained.

### <Comparative Example A4>

An endless belt in which a multi-layered sheet having a polyimide resin surface layer formed on one surface of a composite material of a fluorine resin and a woven fabric of glass fibers is joined at edges

A composite material (thickness: 130 µm) of a fluorine resin and glass fibers was obtained in the same manner as in Comparative Example A2. A treated surface by surface activation and a polyimide resin surface layer were formed in the same manner as in Comparative Example A2, and thus, a multi-layered sheet (thickness: 135 µm) having a polyimide resin surface layer formed on one surface of a composite material of a fluorine resin and glass fibers was obtained.

The polyimide resin surface layer and the treated surface by surface activation of the above-mentioned multi-layered sheet (thickness: 135 µm) having the polyimide resin surface layer formed on one surface of the composite material of the fluorine resin and glass fibers were scraped off at one edge to expose the surface of the fluorine resin layer. This edge and the other edge were laminated on the surface of the fluorine resin layer and thermally fused. Thus, an endless belt (thickness at the joint part: 265 µm and thickness of one layer: 135 µm) in which a multi-layered sheet having a polyimide resin surface layer formed on one surface of a composite material of a fluorine resin and a woven fabric of glass fibers was laminated and joined at edges was obtained.

### <Examples D1 to D5>

Multi-layered seamless belts D1 to D5 according to the present invention were obtained in the same manner as in Examples A1 to A5 except that the treated surface by surface activation was formed by performing a metal sodium etching treatment instead of the baking treatment for silica adhesion in Examples A1 to A5.

### <Examples E1, E2, E4 to E6>

Multi-layered seamless belts E1, E2, E4 to E6 according to the present invention were obtained in the same manner as in Examples B1 to B6 except that the treated surface by surface activation was formed by performing a metal sodium etching treatment instead of the baking treatment for silica adhesion in Examples B1, B2, B4 to B6.

### <Examples F1 and F2>

Multi-layered seamless belts F1 and F2 according to the present invention were obtained in the same manner as in Examples C1 to C3 except that the treated surface by surface activation was formed by performing a metal sodium etching treatment instead of the baking treatment for silica adhesion in Examples C1 and C2.

### <Examples G1 to G5>

Multi-layered seamless belts G1 to G5 according to the present invention were obtained in the same manner as in Examples A1 to A5 except that the treated surface by surface activation was formed by performing a plasma treatment instead of the baking treatment for silica adhesion in Examples A1 to A5.

### <Examples H1, H2, H4 to H6>

Multi-layered seamless belts H1, H2, H4 to H6 according to the present invention were obtained in the same manner as in Examples B1, B2, B4 to B6 except that the treated surface by surface activation was formed by performing a plasma treatment instead of the baking treatment for silica adhesion in Examples B1, B2, B4 to B6.

### <Examples I1 and I2>

Multi-layered seamless belts I1 and I2 according to the present invention were obtained in the same manner as in Examples C1 and C2 except that the treated surface by surface activation was formed by performing a plasma treatment instead of the baking treatment for silica adhesion in Examples C1 and C2.

Table 6 below summarizes the circumference, width, and thickness of the belts in each of the above Examples and Comparative Examples.

### [Table 6]

**Table 6**

| | Circumference (mm) | Width (mm) | Thickness (µm) |
|---|---|---|---|
| Example A1 | 200 | 4 | 135 |
| Example B1 | 200 | 4 | 195 |
| Example C1 | 200 | 4 | 150 |
| Example A2 | 300 | 15 | 140 |
| Example B2 | 300 | 15 | 260 |
| Example C2 | 2000 | 500 | 170 |
| Example A3 | 500 | 100 | 200 |
| Example A4 | 1000 | 300 | 155 |
| Example A5 | 2000 | 500 | 220 |
| Example B4 | 500 | 100 | 215 |
| Example B5 | 1000 | 300 | 280 |
| Example B6 | 2000 | 500 | 300 |
| Example A6 | 3600 | 1000 | 130 |
| Example B7 | 2500 | 800 | 130 |
| Example C4 | 3600 | 1000 | 130 |
| Example B8 | 3000 | 900 | 150 |
| Example B9 | 3600 | 1000 | 170 |
| Example J1 | 3600 | 1000 | 130 |
| Comparative Example A1 | 200 | 4 | - |
| Comparative Example B1 | 200 | 4 | - |
| Comparative Example C1 | 200 | 4 | - |
| Comparative Example A2 | 1000 | 300 | 135 |
| Comparative Example B2 | 1000 | 300 | 145 |
| Comparative Example C2 | 1000 | 300 | 150 |
| Comparative Example A3 | 2000 | 500 | 265 |
| Comparative Example A4 | 3600 | 1000 | 135 |
| Example D1 | 30 | 4 | 33 |
| Example D2 | 100 | 10 | 50 |
| Example D3 | 1500 | 400 | 370 |
| Example D4 | 4000 | 1200 | 1800 |
| Example D5 | 5000 | 1500 | 2900 |
| Example E1 | 30 | 4 | 33 |
| Example E2 | 100 | 10 | 60 |
| Example E4 | 1500 | 400 | 370 |
| Example E5 | 4000 | 1200 | 2600 |
| Example E6 | 5000 | 1500 | 4400 |
| Example F1 | 30 | 4 | 33 |
| Example F2 | 5000 | 1500 | 3000 |
| Example G1 | 30 | 4 | 33 |
| Example G2 | 100 | 10 | 50 |
| Example G3 | 1500 | 400 | 370 |
| Example G4 | 4000 | 1200 | 1800 |
| Example G5 | 5000 | 1500 | 2900 |
| Example H1 | 30 | 4 | 33 |
| Example H2 | 100 | 10 | 60 |
| Example H4 | 1500 | 400 | 370 |
| Example H5 | 4000 | 1200 | 2600 |
| Example H6 | 5000 | 1500 | 4400 |
| Example I1 | 30 | 4 | 33 |
| Example I2 | 5000 | 1500 | 3000 |

The above Examples are not exhaustive, and a circumference of 30 to 5000 mm and a width of 4 to 1500 mm can be implemented.

For the thickness of each layer, a seamless belt substrate containing heat-resistant fibers can be implemented with the thickness of 30 to 1000 µm, and the surface layer can be implemented with the thickness of 1 to 300 µm in the case of the fluorine resin layer, 1 to 300 µm in the case of the polyimide resin layer, and 1 to 700 µm in the case of the silicone rubber, and 1 to 700 µm in the case of the fluororubber.

### Composite strength test

As typical examples of Examples, a grid test (1 mm x 100 squares) was performed in accordance with JIS H5400 on the polyimide surface layer, the silicone rubber surface layer, or the fluororubber layer of each of the multi-layered seamless belts and the multi-layered sheets obtained in Examples A1, B1, C1, D1, E1, F1, G1, H1, and I1, and Comparative Examples A1, B1, C1.

Table 7 shows the evaluation results. The number of squares peeled off from the multi-layered seamless belt with a treated surface by surface activation formed was 0 in each multi-layered sheet. On the other hand, in Comparative Examples A1, B1, and C1 in which the treated surface by surface activation was not formed, 100 squares were peeled off.

### [Table 7]

**Table 7**

| | Number of squares peeled off |
|---|---|
| Example A1 | 0 |
| Example B1 | 0 |
| Example C1 | 0 |
| Comparative Example A1 | 100 |
| Comparative Example B1 | 100 |
| Comparative Example C1 | 100 |
| Example D1 | 0 |
| Example E1 | 0 |
| Example F1 | 0 |
| Example G1 | 0 |
| Example H1 | 0 |
| Example I1 | 0 |

### Tensile strength test

As typical examples of Examples, a tensile strength test was performed in accordance with JIS K7137-2 on each of the multi-layered seamless belts and the endless belts in which a multi-layered sheet was joined, which were obtained in Examples A1 and Comparative Examples A2, A3, and A4.

Table 8 shows the evaluation results.

In Comparative Example A2, the composite material layer of the laminated joint part was broken from one seam, and the strength was inferior to that of Example A1 of the same total thickness.

In Comparative Example A3 as well, the composite material layer of the laminated joint part was broken from one seam, and the strength was equal to that of Example A1 despite the almost twice thickness.

### [Table 8]

**Table 8**

| | Maximum thickness (µm) | Thickness at non-joint part (µm) | Breaking strength (N/cm) |
|---|---|---|---|
| Example A1 | 135 | 135 | 300 |
| Comparative Example A2 | 135 | 135 | 80 |
| Comparative Example A3 | 265 | 265 | 300 |
| Comparative Example A4 | 265 | 135 | 300 |

### Heat conductivity test

As a typical example of Examples, each of the multi-layered seamless belt and the endless belt in which a multi-layered sheet was joined, which were obtained in the above-mentioned Example A1 and Comparative Example A4, were compared by the evaluation method described later. Table 9 shows the evaluation results.

Comparative Example A3 and Comparative Example A4 (joint part) which were thick and had the same thickness were poor in heat conductivity while Example A1 and Comparative Example A4 (non-joint part) which were thin and had the same thickness were excellent in heat conductivity. Comparative Example A4 showed a large difference in heat conductivity due to the difference in thickness between the joint part and the non-joint part.

### [Table 9]

**Table 9**

| | 10 seconds later pressurization |
|---|---|
| Example A1 | 147 |
| Comparative Example A3 | 129 |
| Comparative Example A4 (joint part) | 129 |
| Comparative Example A4 (non-joint part) | 147 |

Heat conductivity test: in a pressing machine having an upper heating tool and a lower heat conductor, a sample is placed on the lower heat conductor, and heated and pressed at a heating tool temperature of 200°C and a pressure of 1 Mpa for 10 seconds, and the temperature transmitted to the heat conductor is compared.

### Flexibility test

As typical examples of Examples, a bending test was performed in accordance with JIS R3420 on each of the multi-layered seamless belt as well as the endless belt in which a multi-layered sheet was joined, which were obtained in Example A1 and Comparative Example A3. A shorter bending length indicates better flexibility. Table 10 shows the evaluation results.

### [Table 10]

**Table 10**

| | Bending length (mm) |
|---|---|
| Example A1 | 20 mm |
| Comparative Example A3 | 72 mm |

The above evaluation results show that, compared to the conventional endless belt in which a multi-layered sheet is joined, the multi-layered seamless belt of the present invention does not break from the joint part because there is no joint part, has a uniform and small thickness. If the thickness is the same, the multi-layered seamless belt of the present invention has better strength, excellent heat conductivity and flexibility, reduced conditional unevenness and lowered temperature for use, and improved adaptability to roller, which allows for the use of a roller with a small pulley diameter. As described above, a conveyor and heat treatment belt which is excellent in strength and durability and also excellent in non-adhesiveness, abrasion resistance and grip performance can be provided.

### DESCRIPTION OF THE REFERENCE NUMERALS

11, 12, 13, 14, 15, 16, 17, 18, 19, 20, 21, 22, 23, 24, 25, 26, 27, 28, 29, 30, 31, 32, 33, 34, 35, 36, 37 Multi-layered sheet
2 Composite material layer
2a Fluorine resin
2b Seamless belt substrate containing heat-resistant fibers
3a Surface layer composed of a polyimide resin
3b Surface layer composed of silicone rubber
3c Surface layer composed of fluororubber
4 Treated surface

## Claims

1. A multi-layered seamless belt, comprising a seamless belt substrate containing heat-resistant fibers and a surface layer containing a fluorine resin, a polyimide resin, silicone rubber or a fluororubber.

2. The multi-layered seamless belt according to claim 1, comprising at least one composite material layer containing a seamless belt substrate containing heat-resistant fibers and a fluorine resin, and a surface layer containing a polyimide resin, silicone rubber or a fluororubber.

3. The multi-layered seamless belt according to claim 2, wherein a treated surface by surface activation is present between said composite material layer and said surface layer.

4. The multi-layered seamless belt according to claim 3, wherein said treated surface by surface activation is obtained by performing a baking treatment for silica particle adhesion, a metal sodium etching treatment, a plasma discharge treatment, or a corona discharge treatment onto said composite material layer.

5. The multi-layered seamless belt according to any one of claims 1 to 4, wherein a circumference of said multi-layered seamless belt is 30 to 5,000 mm.

6. The multi-layered seamless belt according to any one of claims 1 to 4, wherein a width of said multi-layered seamless belt is 4 to 1,500 mm.

7. The multi-layered seamless belt according to any one of claims 1 to 4, wherein said seamless belt substrate containing heat-resistant fibers of said multi-layered seamless belt has a thickness of 30 to 1000 µm, and said surface layer of said multi-layered seamless belt has a thickness of 1 to 300 µm in the case of a fluorine resin layer, 1 to 300 µm in the case of a polyimide resin, and 1 to 700 µm in the case of silicone rubber, and 1 to 700 µm in the case of fluororubber.

8. A method of producing a multi-layered seamless belt, comprising forming a surface layer containing a fluorine resin, a polyimide resin, silicone rubber or fluororubber on a seamless belt substrate containing heat-resistant fibers.

9. A method of producing a multi-layered seamless belt, comprising impregnating a seamless belt substrate containing heat-resistant fibers with an aqueous suspension of fluorine resin particles, drying and then baking the resulting seamless belt substrate to form a composite material layer, and then applying a polyimide resin, silicone rubber or fluororubber to said composite material layer to form a surface layer.

10. The method of producing a multi-layered seamless belt according to claim 9, comprising, after said composite material layer is formed, forming a treated surface by surface activation by performing a baking treatment for silica particle adhesion, a metal sodium etching treatment, a plasma discharge treatment, or a corona discharge treatment onto said composite material layer, and then applying said polyimide resin, silicone rubber or fluororubber to form a surface layer.
